# EUROPEAN PATENT SPECIFICATION

(11) **EP 1 759 295 B1**
(45) Date of publication and mention of the grant of the patent: **12.11.2008**
(21) Application number: 05760595.8
(22) Date of filing: 10.06.2005
(51) Int. Cl.: G06F 12/06

(54) **A MECHANISM FOR SEQUESTERING MEMORY FOR A BUS DEVICE**
MECHANISMUS ZUR SPEICHERSEQUESTRIERUNG FÜR BUSGERÄTE
MECANISME PERMETTANT D'ENCRYPTER UNE MEMOIRE POUR UN DISPOSITIF DE BUS

(30) Priority: 24.06.2004 US 876190
(43) Date of publication of application: 07.03.2007
(73) Proprietor: Intel Corporation, Santa Clara, CA 95052 (US)
(72) Inventor: DURHAM, David, SC4-202, Santa Clara, 95052-8119 (US); RAJAGOPAL, Priya, c/o Intel Corp., SC4-202, 95052-8119 (US); SAHITA, Ravi, Beaverton, OR 97007 (US)
(74) Representative: Goddar, Heinz J.
(86) International application number: PCT/US2005/020509
(87) International publication number: WO 2006/011958

(56) References cited:
- US-A1- 2002 073 296
- US-A1- 2002 198 608
- US-A1- 2003 097 503

## Description

### FIELD OF THE INVENTION

The present invention relates to computer systems; more particularly, the present invention relates to computer system memory access for use by memory constraint embedded system controllers.

### BACKGROUND

Computer systems have long implemented micro-controllers. Micro-controllers are small, low-cost, low power processing devices that are easily integrated into an integrated circuit chipset. However, a problem with many micro-controllers is that they have limited on-chip memory. The lack of on-chip memory limits the sophistication of the processing that can be done by a micro-controller.
US 2002/0073296 Al discloses a method and apparatus for mapping address space of integrated programmable devices within host system memory.

### BRIEF DESCRIPTION OF THE DRAWINGS

The present invention will be understood more fully from the detailed description given below and from the accompanying drawings of various embodiments of the invention. The drawings, however, should not be taken to limit the invention to the specific embodiments, but are for explanation and understanding only.

**Figure 1** illustrates one embodiment of a computer system;

**Figure 2** illustrates one embodiment of main memory space as viewed by a bus device; and

**Figure 3** illustrates one embodiment of main memory space as viewed by a central processing unit;

**Figure 4** illustrates a flow diagram for one embodiment of the operation of a bus device in initiating sequestered memory management;

**Figure 5** illustrates a flow diagram for one embodiment of the operation of an input/output control hub in initiating sequestered memory management; and

**Figure 6** illustrates a flow diagram for one embodiment of the operation of a memory control hub in initiating sequestered memory management.

### DETAILED DESCRIPTION

A mechanism for sequestering memory for a bus device is described. Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

In the following description, numerous details are set forth. It will be apparent, however, to one skilled in the art, that the present invention may be practiced without these specific details. In other instances, well-known structures and devices are shown in block diagram form, rather than in detail, in order to avoid obscuring the present invention.

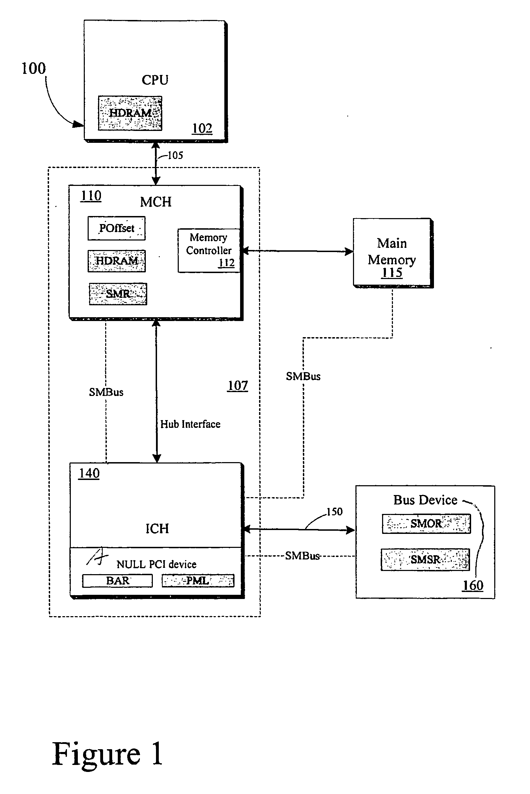

**Figure 1** is a block diagram of one embodiment of a computer system 100. Computer system 100 includes a central processing unit (CPU) 102 coupled to bus 105. In one embodiment, CPU 102 is a processor in the Pentium® family of processors including the Pentium® II processor family, Pentium® III processors, and Pentium® IV processors available from Intel Corporation of Santa Clara, California. Alternatively, other CPUs may be used.

According to one embodiment, bus 105 is a front side bus (FSB) that communicates with a memory control hub (MCH) 110 component of a chipset 107. MCH 110 includes a memory controller 112 that is coupled to a main system memory 115. Main system memory 115 stores data and sequences of instructions and code represented by data signals that may be executed by CPU 102 or any other device included in system 100. In one embodiment, main system memory 115 includes dynamic random access memory (DRAM); however, main system memory 115 may be implemented using other memory types.

In one embodiment, MCH 110 is coupled to an input/output control hub (ICH) 140 via a hub interface. ICH 140 provides an interface to input/output (I/O) devices within computer system 100. For instance, ICH 140 may be coupled to a bus 150. In one embodiment, bus 150 is a Peripheral Component Interconnect bus adhering to a Specification Revision 2.1 bus developed by the PCI Special Interest Group of Portland, Oregon.

In one embodiment, a bus device 160 is coupled to bus 150. In one embodiment, bus device 160 is a network interface card incorporating a micro-controller. However, one of ordinary skill in the art will appreciate that other types of devices may be implemented as bus device 160. In addition, a bus device 160 may be coupled, via a bus, to other computer system 100 components (e.g., MCH 110). As discussed above, micro-controllers have limited on-chip memory, which limits the sophistication of the processing that can be done by a micro-controller.

According to one embodiment, a section of main memory 115 is effectively removed and remapped to a bus 150 device region for use by system bus devices (e.g., bus device 160) as an extension of the devices' available memory. The sequestered memory region may be used to store both executed code as well as non-persistent data.

In one embodiment, an out-of-band (OOB) channel such as the system management bus (SMBus), or a system I/O bus 150 (e.g., PCI bus), is implemented for the purpose of sequestering the physical memory of main memory 115 for use by a slave bus device 160. The sequestered memory is then available for exclusive use by bus device 160 as a program or data store. In a further embodiment, hardware directly partitions memory 115 into different regions and reserves specific regions for exclusive use by device 160.

In order to implement sequestration of memory 115, various functions are added to computer system 100 components. An OOB channel between the MCH and ICH is used for communicating OOB requests from the ICH to MCH. In one embodiment, the SMBus can be used for implementing this OOB channel. For instance, a SMBus interface is provided on MCH 110. Thus, MCH 110 implements a SMBus slave device to service SMBus requests that are initiated by ICH 140 (SMBus master).

In addition, ICH 140 implements a SMBus master device interface to initiate SMBus requests to MCH 110 (SMBus Slave). The SMBus is a two-wire interface through which components within computer system 100 can communicate. If the bus device 160 is using the SMBus technique to communicate memory sequestering requests to ICH 140, ICH 140 functions as a SMBus Slave to service the bus device 160 memory requests.

Further, bus devices 160 that sequester physical memory through the SMBus technique implement a SMBus master device interface that communicates with the ICH 140 SMBus slave interface. This enables a bus device 160 to make memory sequestering requests upon initialization. Note, that if the PCI based technique is used, then the devices 160 should support PCI-X/PCI-E messaging transactions to transmit the memory sequestering requests.

According to one embodiment, new registers are implemented in MCH 110, including a sequestered memory register (SMR), a host dram register (HDRAM), and null PCI offset register (POffset). The SMR register is initialized to the total memory that is reserved for use by bus device 160. In one embodiment, the SMR register is initialized to a value set by ICH 140 via the SMBus once per full power cycle.

Since this setting is performed during hardware initialization, MCH 110 will not allow CPU 102 to modify this register. In one embodiment, this value is set to a fixed percentage (e.g., 5%) of the total memory 115. The size of physical memory 115 reported to CPU 102 through ICH 140 will be the total size of physical memory - SMR.

The HDRAM register represents the start of the sequestered memory region and is equal to the total size of physical memory - SMR. In one embodiment, ICH 140 computes this value based on the memory sequestering requests that are received from devices 160 (via SMBus or PCI-X/E) and communicates this value to memory controller 112 via the SMBus interface.

Once configured, MCH 110 will not direct memory accesses from the HDRAM address to the top of physical memory 115. MCH 110 effectively interprets the memory 115 specified address as the physical top of memory 115 and acts accordingly. Note that CPU 102 also includes a HDRAM register that used similarly to the MCH 110 HDRAM register.

The POffset register is initialized to the base address of the memory-mapped region that is assigned to a null PCI device via setting its base address register (BAR register). ICH 140 communicates this value to MCH 110 after PCI device enumeration by BIOS or the OS. This is the physical memory starting address where the remaining physical memory 115 above the HDRAM address is to be remapped by MCH 110.

According to one embodiment, the null PCI device is implemented at ICH 140. The null PCI device is a regular PCI device that implements the basic PCI configuration space. The null PCI device is hosted by ICH 140 to handle BIOS or OS re-enumeration of bus 150, and thus reassignment of the POffset base address. The POffset value is initialized to the BAR value that is assigned to the null PCI device after bus enumeration. When the null PCI device is relocated and assigned a new BAR, the POffset value is reassigned a new value corresponding to the new BAR.

The null PCI device may implement a memory decoder and request a certain amount of memory-mapped region from memory 115. In one embodiment, this amount is slightly greater than the total amount of memory required by one or more devices 160 for the purpose of handling future hot-plug device 160 requests. The PCI null device does not perform any specific device functionality and does not implement any other control or status registers, and hence does not require any OS drivers.

The null PCI device implements a PCI memory length register (PML). The PML value is initialized either to be a fixed percentage (e.g., 5%) of memory 115 or computed at initialization time after all memory 115 memory requests from device 160 have been accumulated. Once the PML value is determined, it is communicated to MCH 110 via SMBus where the value is stored in the SMR register representing the total amount of sequestered memory. During enumeration of the null PCI device by the system BIOS or OS, the size of the memory mapped region that is requested by the Null PCI device is determined using this register.

Additional registers are also implemented in bus device 160. The registers include a sequestered memory offset register (SMOR) and a sequestered memory size register (SMSR). The SMOR holds the offset into the contiguous reserved memory region that is allocated for the particular device 160. The device 160 requests the offset value from ICH 140 after bus 150 enumeration via SMBus or PCI-X/E. If ICH 140 does not set the register, the device 160 assumes that no memory could be allocated by memory controller 112.

The SMSR represents the upper bound to the sequestered memory region that is allocated to the device 160. The device 160 presents ICH 140 with the size specified by the SMSR to indicate the amount of memory that is required by device 160.

According to one embodiment, the following process occurs during the initialization of the sequestered memory management scheme. First, ICH 140 finds out the total physical memory size via the SMBus connection to physical memory 115. ICH 140 sets the PML register to be a certain percentage (e.g., 5%) of the total physical memory, or calculates this value at initialization time by summing all the memory requests from one or more devices 160 on bus 150.

ICH 140, which hosts the null PCI device, sets the PML register with the value of the total sequestered memory. This configuration ensures that when the BIOS or OS enumerates this null PCI device, the memory BAR interrogation (according to the PCI specification) results in a size equal to the size of the sequestered memory.

Subsequently, ICH 140 communicates the sequestered memory size to MCH 110, which sets the SMR register to be equal to the communicated value. MCH 110 also sets the HDRAM register to be equal to the total physical memory - SMR. On BIOS initialization of MCH 110, HDRAM is effectively the top of the physical memory 115 reported to and made available to CPU 102. Note that from the CPU 102 point of view, the PCI address space is the address range from HDRAM to the maximum addressable memory (4 GB for 32 bit addresses), just as it would be if there was in fact less physical memory in the system.

During the BIOS scan of the bus 150, on finding the ICH 140 hosted null PCI device, the BIOS will set the memory mapped BAR to wherever the BIOS wants to put the null device within the PCI address space. Since the null device is hosted in ICH 140, ICH 140 informs MCH 110 of the PCI memory mapped BAR value assigned by the BIOS. ICH does this via SMBus so that MCH 110 can set its POffset register to the correct base address for the sequestered physical DRAM.

After PCI enumeration, the device 160 requests the value for the SMOR from ICH 140 via SMBus or PCI-X/E. The SMOR value corresponds to an offset into the null PCI memory mapped region (the address range from POffset to POffset + SMR).

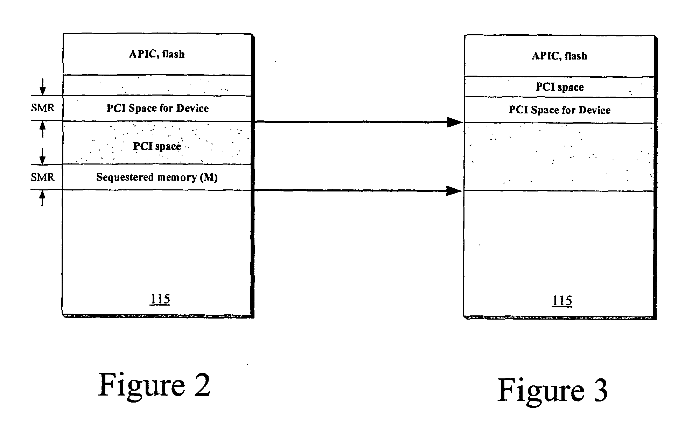

**Figure 2** illustrates one embodiment of main memory 115 space as viewed by a bus device 160, while **Figure 3** illustrates one embodiment the memory space as viewed by CPU 102. Notice that the sequestered memory space is assumed to be a portion of the PCI space by CPU 102.

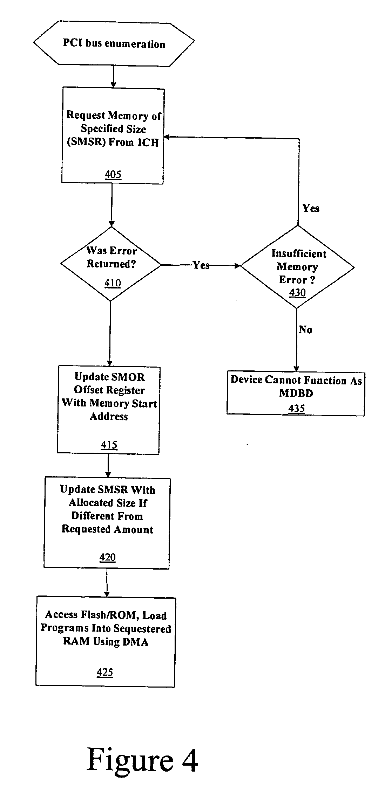

**Figures 4-6** illustrate a device specific view of the initiation process. **Figure 4** illustrates a flow diagram for one embodiment of the operation of a bus device 160 in initiating sequestered memory management. At processing block 405, bus device 160 uses the SMBus (or PCI-X/PCI-E) to request memory of specified size (SMSR) from ICH 140 in the form of a memory request command. At decision block 410, it is determined whether an error was returned from ICH 140.

If no error is returned, a memory start address is received at the device 160 and the SMOR offset register is updated with the memory start address, process block 415. At process block 420, SMSR is updated with the allocated size if it is different from the requested amount. At process block 425, access Flash/ROM, loads programs into the sequestered portion of memory 115 using DMA.

If at decision block 410, an error is returned, it is determined whether the error is an insufficient memory error, decision block 430. If the error is not an insufficient memory error, the device cannot function in according to the sequestered memory mechanism, processing block 435. If the error is an insufficient memory error, control is returned to processing block 405 where another SMSR is requested from ICH 140.

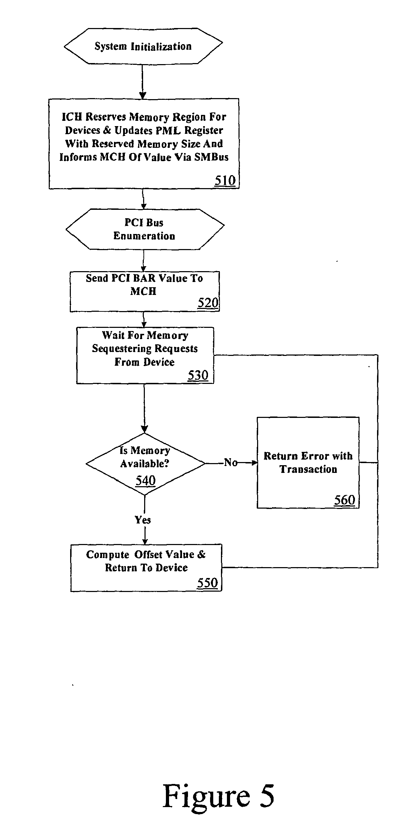

**Figure 5** illustrates a flow diagram for one embodiment of the operation of an ICH 140 in initiating sequestered memory management. At processing block 510, ICH 140 reserves a memory region for one or more devices 160 and updates the PML register with reserved memory size. Further, ICH 140 informs MCH 110 of this value via SMBus.

At processing block 520, ICH 140 transmits the PCI BAR value to MCH 110. At processing block 530, ICH 140 waits for the memory request command from device 160 (e.g., processing block 405 of **Figure 4**). At decision block 540, it is determined whether memory is available. If memory is available, an offset is computed and returned to the device 160, processing block 550. Subsequently, control is returned to processing block 530, where ICH 140 waits for a memory request command from a device 160.

If at decision block 540 memory is not available, an error is returned to the device 160 specifying amount of memory available. Subsequently, control is returned to processing block 530, where ICH 140 waits for a command request from a device 160.

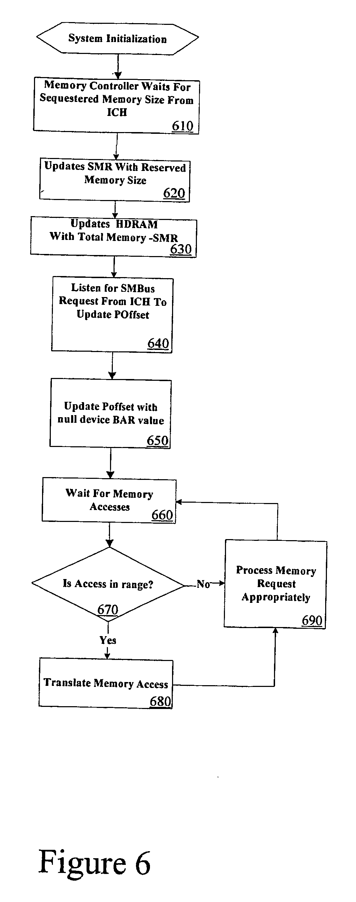

**Figure 6** illustrates a flow diagram for one embodiment of the operation of a MCH 110 in initiating sequestered memory management and servicing memory accesses during device 160 operation. At processing block 610, memory controller 112 waits for the sequestered memory size (e.g., PML) from ICH 140. At processing block 620, SMR is updated with the reserved memory size. At processing block 630, HDRAM is updated with Total Memory - SMR.

At processing block 640, MCH 110 listens for a SMBus request (e.g., SMBus PCI BAR value) from ICH 140 to update POffset. At processing block 650, POffset is updated with the null device BAR value. In one embodiment, the OS may move the null PCI device thereby changing its memory mapped BAR value upon a re-scan of the PCI bus. This will require ICH 140, which is inline to these changes, to re-inform MCH 110 (via the SMBus) to similarly adjust the POffset register. Subsequently, devices 160 request updated SMOR values from the ICH.

At processing block 660, MCH 110 waits for a memory access from the bus device. At decision block 670, it is determined whether the access from the bus device is in the range of POffset to (POffset +SMR). If the access is in range, the memory access is forwarded to the corresponding offset into the sequestered memory range from HDRAM to (HDRAM + SMR), processing block 680.

At processing block 690, the memory request is processed appropriately within the sequestered memory range. If at decision block 670, the access is not in range, the memory request is processed appropriately at non-sequestered space within memory 115.

MCH 140 should not forward any host-side accesses for this PCI address region from POffset to (POffset + SMR) to the sequestered memory region. This is specifically relevant for memory writes to provide protection of the sequestered memory region from dysfunctional or malicious software running on the host.

The above-described memory sequestering mechanism increases the value of micro-controllers, by allowing micro-controllers to execute sophisticated programs and algorithms and by sharing the host CPU's extensive memory resources at no additional cost. Further, the memory sequestering method provides the same attributes of security, isolation and autonomy as collecting extensive amounts of memory locally with system bus devices for their exclusive use.

Moreover, isolation from the operating system prevents OS malfunction or malicious software from affecting the operation of the micro-controller. This capability has advantages since it provides a sandbox execution environment for remote code downloaded by management stations. This allows a micro-controller to run code in an isolated and tamper proof manner. This kind of seclusion also prevents the operating system and supporting software from reclaiming the sequestered physical memory region away from the device or accidentally writing to that memory region. Malicious modification to any host or BIOS features will not prevent this mechanism from functioning.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as the invention.

## Claims

1. A method comprising:
determining (405) at a chipset a total physical size of a main memory device;
the chipset sequestering (415) a physical portion of the main memory via a first out of band channel; and
remapping the sequestered portion of the main memory device to a bus
device region to be used exclusively by one or more input/output (I/O) devices coupled on an I/O bus.

2. The method of claim 1 further comprising calculating a percentage of the main memory device to sequester based upon one or more requests received from the one or more I/O devices.

3. The method of claim 1 further comprising:
assigning (420) to a first register a value indicating the sequestered portion of the main memory device;
assigning to a second register a value indicating the total physical size of the main memory minus the sequestered portion.

4. The method of claim 1 further comprising receiving a request at the chipset to access the main memory device.

5. The method of claim 4 further comprising:
determining whether the access has a range in the bus device region;
translating the memory access to the sequestered portion of the main memory device if the access has a range in the bus device region; and
processing the memory request within the range of the sequestered portion.

6. The method of claim 5 further comprising processing the memory request within the range of the non-sequestered portion of the main memory device if the access has a range that is not in the bus device region.

7. A chipset comprising:
a memory control component (110) to access a main memory device (115); and
an input/output (I/O) component (140) to receive I/O requests from one or
more I/O devices (160) coupled to the I/O component via an I/O bus, **characterized in that** the I/O component (140) is adjusted further to remap a physical segment of the main memory device (115) to a bus device region via a first out of band channel for exclusive use by the one or more I/O devices.

8. The chipset of claim 7 wherein the I/O component initiates the establishment of the bus device region upon start up of a bus device.

9. The chipset of claim 7 wherein the memory control component (110)comprises a first register to indicate the total magnitude of the bus device region, a second register to indicate the start of the bus device region, and a third register to indicate a physical memory starting address for the bus device region.

10. The chipset of claim 9 wherein the memory control component (110) will not allow the CPU to modify the first register to protect the sequestered memory region from tampering, corruption or misconfiguation by malicious or error prone software running on the host.

11. The chipset of claim 7 wherein the I/O component (140) is implemented as a null device to implement a memory decoder in order to request the re-mapping of the main memory device.

12. The chipset of claim 11 wherein each of the one or more devices include a first register to hold an offset into the bus device region the device, and a second register to indicate an upper bond of the bus device region allocated for the device.

13. The chipset of claim 11 wherein each of the one or more devices (160) presents the I/O control component (140) with the size specified by the second register.

14. A computer system comprising:
a central processing unit (CPU) (102);
a memory control component (110) coupled to the CPU;
a main memory device (115) coupled to the memory control device; and_a chip set of on of claims 7 to 13.

15. The computer system of claim 14 wherein the I/O control component (140) sequesters the physical segment upon initialization of the one or more I/O devices (160).

16. The computer system of claim 14 wherein the I/O control component (140) calculates a percentage of the main memory device (115) to sequester based upon one or more requests received from the one or more I/O devices (160).

17. The computer system of claim 14 further comprising:
a second out of band channel coupled between the device (160) and the I/O control component (140); and
a third out of band channel coupled between the I/O control component (140) and the memory control component (110).

18. The computer system of claim 17 wherein, the second out of band channel and the third out of band channel are implemented to remap the physical segment of the main memory to the bus device region.

19. The computer system of claim 17 wherein the I/O control component (140) operates as a master device and the memory control component (110) operates as a slave device to service requests initiated at the I/O control component to establish the bus device region.

20. The computer system of claim 14 wherein the bus is a PCI- X bus.

21. The computer system of claim 20 wherein the I/O control component (140) initiates the establishment of the bus device region via PCI-X messaging.

## Patentansprüche

1. Verfahren, aufweisend:
Bestimmen (405) einer physikalischen Gesamtgröße einer Hauptspeichervorrichtung bei einem Chipsatz;
Absondern (415) eines physikalischen Teils des Hauptspeichers über einen ersten Out-of-Band-Kanal durch den Chipsatz; und
Neu-Abbilden des abgesonderten Teils der Hauptspeichervorrichtung auf einen Busvorrichtungsbereich, der ausschließlich durch eine oder mehrere Eingabe/Ausgabe (I/O)-Vorrichtungen, die an den I/O-Bus gekoppelt sind, verwendet wird.

2. Verfahren nach Anspruch 1, des Weiteren aufweisend ein Berechnen eines abzusondernden Anteils der Hauptspeichervorrichtung basierend auf einer oder mehreren Anfragen, die von der einen oder mehreren I/O-Vorrichtungen empfangen wurden.

3. Verfahren nach Anspruch 1, des Weiteren aufweisend:
Zuordnen (420) eines Werts, der den abgesonderten Teil der Hauptspeichervorrichtung anzeigt, zu einem ersten Register;
Zuordnen eines Werts, der die physikalische Gesamtgröße des Hauptspeichers abzüglich des abgesonderten Teils anzeigt, zu einem zweiten Register.

4. Verfahren nach Anspruch 1, des Weiteren aufweisend ein Empfangen einer Anfrage an dem Chipsatz, auf die Hauptspeichervorrichtung zuzugreifen.

5. Verfahren nach Anspruch 4, des Weiteren aufweisend:
Bestimmen, ob der Zugriff ein Intervall im Busvorrichtungsbereich hat;
Umwandeln des Speicherzugriffs auf den abgesonderten Abschnitt der Hauptspeichervorrichtung, falls der Zugriff ein Intervall im Busvorrichtungsbereich hat; und
Verarbeiten der Speicheranfrage innerhalb des Intervalls des abgesonderten Abschnitts.

6. Verfahren nach Anspruch 5, des Weiteren aufweisend ein Verarbeiten der Speicheranfrage innerhalb des Intervalls des nicht abgesonderten Abschnitts der Hauptspeichervorrichtung, falls der Zugriff ein Intervall hat, das nicht im Busvorrichtungsbereich ist.

7. Chipsatz, aufweisend:
eine Speichersteuerkomponente (110) zum Zugreifen auf eine Hauptspeichervorrichtung (115); und
eine Eingabe/Ausgabe (I/O)-Komponente (140) zum Empfangen von I/O-Anfragen von einer oder mehreren I/O-Vorrichtungen (160), die an die I/O-Komponente über einen I/O-Bus gekoppelt sind, **dadurch gekennzeichnet, dass** die I/O-Komponente (140) des Weiteren eingerichtet ist, ein physikalisches Segment der Hauptspeichervorrichtung (115) auf einen Busvorrichtungsbereich über einen ersten Out-of-Band-Kanal zur ausschließlichen Verwendung durch die eine oder mehreren I/O-Vorrichtungen neu-abzubilden.

8. Chipsatz nach Anspruch 7, wobei die I/O-Komponente die Einrichtung des Busvorrichtungsbereichs beim Starten einer Busvorrichtung initiiert.

9. Chipsatz nach Anspruch 7, wobei die Speichersteuerkomponente (110) ein erstes Register zum Anzeigen der Gesamtgröße des Busvorrichtungsbereichs, ein zweites Register zum Anzeigen des Anfangs des Busvorrichtungsbereichs und ein drittes Register zum Anzeigen einer physikalischen Speicheranfangsadresse für den Busvorrichtungsbereich aufweist.

10. Chipsatz nach Anspruch 9, wobei die Speichersteuerkomponente (110) nicht zulassen wird, dass die CPU das erste Register modifiziert, um den abgesonderten Speicherbereich vor Manipulation, Verfälschung oder Fehlkonfiguration durch bösartige oder fehleranfällige Software, die auf dem Host läuft, zu schützen.

11. Chipsatz nach Anspruch 7, wobei die I/O-Komponente (140) als ein Null-Device implementiert ist, um einen Speicherdekoder zu implementieren, um das Neu-Abbilden der Hauptspeichervorrichtung anzufragen.

12. Chipsatz nach Anspruch 11, wobei jede der einen oder mehreren Vorrichtungen ein erstes Register zum Aufnehmen eines Offsets im Busvorrichtungsbereich der Vorrichtung und ein zweites Register zum Anzeigen einer oberen Schranke des der Vorrichtung zugewiesenen Busvorrichtungsbereichs umfasst.

13. Chipsatz nach Anspruch 11, wobei jede der einen oder mehreren Vorrichtungen (160) die I/O-Steuerkomponente (140) mit der durch das zweite Register bestimmte Größe präsentiert.

14. Computersystem, aufweisend:
eine Zentraleinheit (CPU) (102);
eine Speichersteuerkomponente (110), die an die CPU gekoppelt ist;
eine Hauptspeichervorrichtung (115), die an die Speichersteuervorrichtung gekoppelt ist; und einen Chipsatz nach einem der Ansprüche 7 bis 13.

15. Computersystem nach Anspruch 14, wobei die I/O-Steuerkomponente (140) beim Initialisieren der einen oder mehreren I/O-Vorrichtungen (160) das physikalische Segment absondert.

16. Computersystem nach Anspruch 14, wobei die I/O-Steuerkomponente (140) einen abzusondernden Anteil der Hauptspeichervorrichtung (115) basierend auf einer oder mehreren Anfragen, die von der einen oder mehreren I/O-Vorrichtungen (160) empfangen wurden, berechnet.

17. Computersystem nach Anspruch 14, des Weiteren aufweisend:
einen zweiten Out-of-Band-Kanal, der zwischen der Vorrichtung (160) und der I/O-Steuerkomponente (140) angeschlossen ist; und
einen dritten Out-of-Band-Kanal, der zwischen der I/O-Steuerkomponente (140) und der Speichersteuerkomponente (110) angeschlossen ist.

18. Computersystem nach Anspruch 17, wobei der zweite Out-of-Band-Kanal und der dritte Out-of-Band-Kanal zum Neu-Abbilden des physikalischen Segments des Hauptspeichers auf den Busvorrichtungsbereich implementiert sind.

19. Computersystem nach Anspruch 17, wobei die I/O-Steuerkomponente (140) als eine Master-Vorrichtung und die Speichersteuerkomponente (110) als eine Slave-Vorrichtung arbeitet, um an der I/O-Steuerkomponente initiierte Anfragen zum Einrichten des Busvorrichtungsbereichs zu bedienen.

20. Computersystem nach Anspruch 14, wobei der Bus ein PCI-X-Bus ist.

21. Computersystem nach Anspruch 20, wobei die I/O-Steuerkomponente (140) die Einrichtung des Busvorrichtungsbereichs über PCI-X-Messaging initiiert.

## Revendications

1. Procédé comportant les étapes consistant à :
déterminer (405) au niveau d'un jeu de puces une taille physique totale d'un dispositif de mémoire principale,
la séquestration (415) par le jeu de puces d'une partie physique de la mémoire principale via un premier canal hors bande, et
remettre en correspondance la partie séquestrée du dispositif de mémoire principale avec une région de dispositif de bus devant être utilisée exclusivement par un ou plusieurs dispositifs d'entrée/sortie (E/S) couplés sur un bus E/S.

2. Procédé selon la revendication 1 comportant en outre le calcul d'un pourcentage du dispositif de mémoire principale à séquestrer sur la base d'une ou de plusieurs requêtes reçues à partir d'un ou de plusieurs dispositifs E/S.

3. Procédé selon la revendication 1, comportant en outre les étapes consistant à :
assigner (420) à un premier registre une valeur indiquant la partie séquestrée du dispositif de mémoire principale,
assigner à un second registre une valeur indiquant la taille physique totale de la mémoire principale moins la partie séquestrée.

4. Procédé selon la revendication 1, comportant en outre la réception d'une requête au niveau du jeu de puces pour accéder au dispositif de mémoire principale.

5. Procédé selon la revendication 4 comportant en outre les étapes consistant à :
déterminer si l'accès dispose d'une plage dans la région de dispositif de bus,
transposer l'accès mémoire vers la partie séquestrée du dispositif de mémoire principale si l'accès a une plage dans la région de dispositif de bus, et
traiter la requête de mémoire à l'intérieur de la plage de la partie séquestrée.

6. Procédé selon la revendication 5, comportant en outre le traitement de la requête de mémoire à l'intérieur de la plage de la partie non séquestrée du dispositif de mémoire principale, si l'accès dispose d'une plage qui n'est pas dans la région de dispositif de bus.

7. Jeu de puces comportant :
un composant de commande de mémoire (110) pour accéder à un dispositif de mémoire principale (115), et
un composant d'entrée/sortie (E/S) (140) pour recevoir des requêtes E/S à partir d'un ou de plusieurs dispositifs E/S (160) couplés au composant E/S via un bus E/S, **caractérisé en ce que** le composant E/S (140) est en outre ajusté pour remettre en correspondance un segment physique du dispositif de mémoire principale (115) avec une région de dispositif de bus via un premier canal hors bande pour utilisation exclusive par un ou plusieurs dispositifs E/S.

8. Jeu de puces selon la revendication 7, dans lequel le composant E/S initialise l'établissement de la région de dispositif de bus lors du démarrage d'un dispositif de bus.

9. Jeu de puces selon la revendication 7, dans lequel le composant de commande de mémoire (110) comporte un premier registre pour indiquer l'amplitude totale de la région de dispositif de bus, un deuxième registre pour indiquer le départ de la région de dispositif de bus, et un troisième registre pour indiquer une adresse de démarrage de mémoire physique pour la région de dispositif de bus.

10. Jeu de puces sur la revendication 9, dans lequel le composant de commande de mémoire (110) ne permet pas à la CPU de modifier le premier registre afin de protéger la région de mémoire séquestrée vis-à-vis de toute atteinte, corruption ou mauvaise configuration de la part d'un logiciel malfaisant ou enclin aux erreurs fonctionnant sur l'ordinateur central.

11. Jeu de puces selon la revendication 7, dans lequel le composant E/S (140) est mis en oeuvre sous la forme d'un dispositif de valeur nulle afin de mettre en oeuvre un décodeur de mémoire afin de demander la remise en correspondance du dispositif de mémoire principale.

12. Jeu de puces selon la revendication 11, dans lequel chacun des un ou plusieurs dispositifs comporte un premier registre pour conserver un décalage dans la région de dispositif de bus du dispositif, et un deuxième registre pour indiquer une liaison supérieure de la région de dispositif de bus allouée au dispositif.

13. Jeu de puces selon la revendication 11, dans lequel chacun des un ou plusieurs dispositifs (160) présente le composant de commandes E/S (140) avec la dimension spécifiée par le deuxième registre.

14. Système informatique comportant les éléments suivants :
une unité centrale de traitement (CPU) (102),
un composant de commande de mémoire (110) couplé à la CPU,
un dispositif de mémoire principale (115) couplé au dispositif de commande de mémoire, et un jeu de puces selon l'une quelconque des revendications 7 à 13.

15. Système informatique selon la revendication 14, dans lequel le composant de commande E/S (140) séquestre le segment physique à l'initialisation d'un ou de plusieurs des dispositifs E/S (160).

16. Système informatique selon la revendication 14, dans lequel le composant de commande E/S (140) calcule un pourcentage du dispositif de mémoire principale (115) à séquestrer sur la base d'une ou de plusieurs requêtes reçues à partir des un ou plusieurs dispositifs E/S (160).

17. Système informatique selon la revendication 14, comportant en outre les éléments suivants :
un deuxième canal hors bande couplé entre le dispositif (160) et le composant de commande E/S (140), et
un troisième canal hors bande couplé entre les composants de commande E/S (140) et le composant de commande de mémoire (110).

18. Système informatique selon la revendication 17, dans lequel le deuxième canal hors bande et le troisième canal hors bande sont mis en oeuvre afin de remettre en correspondance le segment physique de la mémoire principale avec la région de dispositif de bus.

19. Système informatique selon la revendication 17, dans lequel le composant de commande E/S (140) agit comme dispositif maître, et le composant de commande de mémoire (110) agit comme dispositif esclave pour satisfaire des requêtes émises au niveau du composant de commande E/S pour établir la région de dispositif de bus.

20. Système informatique selon la revendication 14, dans lequel le bus est un bus PCI-X.

21. Système informatique selon la revendication 20, dans lequel le composant de commande E/S (140) déclenche l'établissement de la région de dispositif de bus via des échanges de messages PCI-X.
